# EUROPÄISCHE PATENTANMELDUNG

(11) **EP 1 593 950 A1**
(43) Veröffentlichungstag der Anmeldung: **09.11.2005**
(21) Anmeldenummer: 04011011.6
(22) Anmeldetag: 07.05.2004
(51) Int. Cl.: G01M 13/02

(54) **Prüfvorrichtung zum Prüfen des Rundlauffehlers von Zahnrädern**

(71) Anmelder: Klingelnberg GmbH, 42499 Hückeswagen (DE)
(72) Erfinder: Golder, Peter, 76275 Ettlingen (DE); Neuthinger, Albert, 76316 Malsch (DE)
(74) Vertreter: OK pat AG

(57) **Zusammenfassung**

Vorrichtung (30) mit einer Lagerung (2) zum drehbaren Lagern eines zu vermessenden Zahnrades (3), einem ersten Antrieb (5) zum Drehen des zu vermessenden Zahnrades (3), und mit einem ersten Schlitten (7), der durch einen zweiten Antrieb (12) radial in Bezug zu einem auf der Lagerung (2) gelagerten Zahnrad (3) verschiebbar ist. Der erste Schlitten (7) weist eine Aufhängung (23) auf, die einen Taster (21) mit Tastkopf (22) trägt, wobei die Aufhängung (23) so an dem ersten Schlitten (7) gelagert ist, dass sie in einer Richtung verschiebbar ist, die tangential in Bezug zu dem auf der Lagerung (2) gelagerten Zahnrad (3) verläuft. Es ist eine Ansteuerung vorgesehen, um den ersten Schlitten (7) samt der Aufhängung (23) und dem Taster (21) mit Tastkopf (22) radial in eine Zahnlücke des zu vermessenden Zahnrades (3) zuzustellen und um den Tastkopf (22) mit zwei Flanken der Zahnlücke in Verbindung zu bringen. Weiterhin ist eine Messvorrichtung (18, 19) vorgesehen, um eine Messgrösse (*F*ᵣ) zu erfassen, welche die Verschiebung des Tastkopfes (22) in der Zahnlücke beschreibt während das zu vermessende Zahnrad (3) durch den ersten Antrieb (5) gedreht wird und welche von dem zu vermessenden Zahnrad (3) aus betrachtet radial nach aussen gerichtet ist.

## Beschreibung

Die Erfindung betrifft eine Prüfvorrichtung für Zahnräder zum Prüfen des Rundlauffehlers der im Oberbegriff des Anspruches 1 angegebenen Art.

### HINTERGRUND DER ERFINDUNG

Prüfvorrichtungen für Zahnräder werden vielfach in automatischen Fertigungsstrassen für Zahnräder eingesetzt, um beispielsweise eine zuvor gefräste Verzahnung zu überprüfen, ehe der nächste Arbeitsgang am gleichen Werkstück vorgenommen wird. Dadurch kann vermieden werden, dass ein grob fehlerhaftes Zahnrad unnötig weiter bearbeitet wird oder den nächsten Arbeitsgang behindert, zu erhöhtem Werkzeugverschleiss führt oder gar das Werkzeug zerstört. Aufgrund der Prüfung kann dieses Zahnrad rechtzeitig entdeckt und aus der Produktion genommen werden.

Derartige Prüfvorrichtung für Zahnräder werden aber auch zu anderen Zwecken eingesetzt. Besonders für das Vermessen oder Prüfen grosser Zahnrädern (zum Beispiel mit einem Durchmesser von mehr als 2 Metern), die mittels der gängigen Messsysteme nicht vermessen werden können, besteht der Bedarf für einfache und trotzdem genaue Messlösungen.

Es sind bereits eine Reihe von automatisch arbeitenden Prüfvorrichtungen bekannt, die für die Rundlaufmessung an Zahnrädern eingesetzt werden können. Bei der Rundlaufmessung wird typischerweise der Rundlauffehler, auch Rundlaufabweichung genannt, ermittelt. Details hierzu sind zum Beispiel der deutschen Norm DIN 3960 zu entnehmen. Gemäss der genannten Norm ist die Rundlaufabweichung *F*ᵣ einer Verzahnung der radiale Lageunterschied eines nacheinander in alle Zahnlücken eingelegten Messstückes (Kugel, oder Zylinder oder Messkeil), das die Zahnflanken in V-Kreisnähe berührt, wobei das Zahnrad in seiner Führungsachse drehbar aufgenommen ist. Mit *F*ᵣ wird der grösste Unterschied zwischen den am Radumfang aufgetretenen Messwerten bezeichnet. Eine solche Rundlaufabweichung wird im Wesentlichen verursacht durch eine Aussermittigkeit der Verzahnung in der zur Radachse senkrechten Messebene und durch eine Ungleichmässigkeit der Lückenweite infolge von Teilungsabweichungen der Rechts- und Linksflanken. Der V-Kreis ist auch in der genannten Norm definiert.

Es ist eine Aufgabe der Erfindung eine Vorrichtung bereit zu stellen, die einfach und genau die Rundlaufabweichung einer Verzahnung ermittelt.

Die Aufgabe wird durch eine Vorrichtung gemäss Anspruch 1 gelöst.

Vorteilhafte Ausgestaltungen des erfindungsgemässen Vorrichtung bilden die Gegenstände der Ansprüche 2 bis 10.

Die durch Erfindung erzielte Vereinfachung und Kosteneinsparung im Aufbau und der Montage der Vorrichtung sind offensichtlich.

### ZEICHNUNGEN

Ausführungsbeispiele der Erfindung werden im Folgenden unter Bezugnahme auf die Zeichnungen näher beschrieben. Es zeigen:
- **FIG. 1**: eine schematische Seitenansicht eines ersten Vorrichtung, gemäss Erfindung;
- **FIG. 2**: eine schematische Draufsicht der ersten Vorrichtung, gemäss Erfindung;
- **FIG. 3**: eine schematische Draufsicht einiger Zähne eines Zahnrads mit Messtaster;
- **FIG. 4**: eine schematische Draufsicht der weiteren Vorrichtung, gemäss Erfindung;
- **FIG. 5**: eine schematische Draufsicht der weiteren Vorrichtung, gemäss Erfindung, die Messtaster zur Teilungsmessung aufweist;
- **FIG. 6**: ein schematisches Blockdiagramm, gemäss Erfindung.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

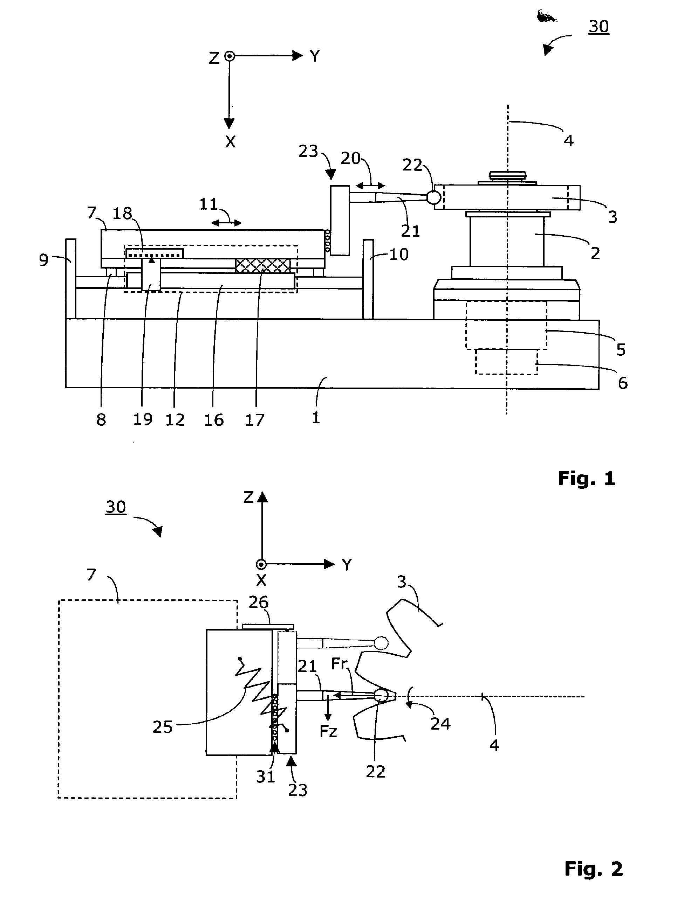

In einer vorteilhaften Ausführungsform der Erfindung, die in Fig. 1 gezeigt ist, trägt ein Grundgestell 1 der Vorrichtung 30 eine ortsfeste Spindel 2, auf der ein zu prüfendes Zahnrad 3 aufgespannt und um die Achse 4 drehbar ist. Die Spindel 2 dient als Lagerung zum drehbaren Lagern des zu vermessenden Zahnrades 3. Ein Motor 5 treibt die Spindel 2 an, deren Winkelpositionen zum Beispiel von einem Drehgeber 6 erfasst werden. Auf dem Grundgestell 1 befindet sich ausserdem ein dynamischer, intelligenter Schwingschlitten 7, der mit Hilfe einer Führung 8 zwischen den Anschlägen 9 und 10 linear geführt wird und in Richtung des Doppelpfeils 11 (parallel zur Y-Achse) leicht beweglich ist. Der dynamische, intelligente Schwingschlitten 7 wird im Folgenden als Radialschlitten 7 bezeichnet, da er in Bezug auf das Zahnrad 3 Radialbewegung ausführt. Der Radialschlitten 7 kann mit einem Linearmotor 12 angetrieben werden, der einen langgestreckten Stator 16 auf dem Grundgestell 1 und einen kurzen Läufer 17 unter dem Radialschlitten 7 umfasst. Ausserdem kann zu dem Linearmotor 12 ein Wegmesssystem gehören, das einen Glasmassstab 18 und einen Abtastkopf 19 umfasst. Zusätzlich ist zum Ansteuern des Radialschlittens 7 eine nicht dargestellte CNC-Steuerung vorgesehen. Mögliche Details einer beispielhaften CNC-Steuerung sind der Fig. 6 zu entnehmen. Auf dem Radialschlitten 7 ist ein Taster 21 mit einer Kugel 22 vorgesehen. Der Taster 21 samt Kugel 22 ist in dem gezeigten Ausführungsbeispiel sowohl parallel zur Y-Achse beweglich (d.h. radial vom Zahnrad 3 aus betrachtet), wie durch den Doppelpfeil 20 angedeutet, als auch parallel zur Z-Achse, die senkrecht auf der Zeichenebene steht. Um die Beweglichkeit parallel zur Z-Achse zu erreichen, kann der Taster 21 samt Kugel 22 zum Beispiel mittels einer Aufhängung 23, wie in Fig. 1 schematisch angedeutet, mit dem Radialschlitten 7 verbunden sein. Die Aufhängung 23 wird vorzugsweise als Schlitten realisiert und wird daher im Folgenden als Tangentialschlitten 23 bezeichnet, da dieser Tangentialschlitten 23 eine tangential gerichtete Bewegung (d.h. tangential vom Zahnrad 3 aus betrachtet) ermöglicht.

Weitere Details zu dieser Ausführungsform können der Fig. 2 entnommen werden. Die Fig. 2 stellt eine schematische Draufsicht der Vorrichtung 30 dar. Aus Fig. 2 ist zu erkennen, dass die Kugel 22 des Tasters 21 in den Zahnzwischenraum zwischen zwei Zähnen des zu vermessenden Zahnrads 3 eintaucht. Zu diesem Zweck wird der Taster 21 durch den Linearmotor 12 soweit radial (parallel zur Y-Achse) in die Zahnlücke zugestellt, bis die Kugel 22 die rechte und linke Flanke der Zahnlücke berührt. Durch den Linearmotor 12 wird in dieser Messposition ein vorgegebener Anpressdruck (Messdruck genannt) erzeugt.

Das Zahnrad 3 wird in der bevorzugten Ausführungsform durch den Motor 6 während der Messung kontinuierlich um die Achse 4 gedreht, wie durch den Pfeil 24 angedeutet. Durch diese Drehung wird der Taster 21 samt Kugel 22 mitgenommen und vollzieht eine Bewegung sowohl in negativer Z-Richtung (tangential gerichtet), als auch in negativer Y-Richtung (radial gerichtet), da die Kugel 22 nach hinten aus dem Zahnzwischenraum "verdrängt" wird. Sobald die rückwärtsgerichtete "Verdrängungsbewegung" der Kugel 22 umkehrt - diese Position wird als Position der maximalen Auslenkung bezeichnet - wird mindestens die Messgrösse *F*ᵣ ermittelt. *F*ᵣ entspricht der maximalen Auslenkung. Zusätzlich zur Messgrösse *F*ᵣ können auch andere Messgrössen, zum Beispiel die Messgrösse *F*_{z}, ermittelt werden. Sobald die Auslenkung der Kugel 22 umkehrt, wird der Taster 21 samt Kugel 22 automatisch zurückgezogen, indem der Radialschlitten 7 durch den Linearantrieb 12 schnell in negativer Y-Richtung bewegt wird. Durch diese Massnahme wird verhindert, dass die Messkugel 22 unnötig entlang der Zahnflanke des Zahnrades 3 gleitet und dadurch abgenützt wird. Da gemäss der beschriebenen Ausführungsform der Erfindung diese Umkehrposition ermittelt wird, um ein automatisches, aktives Zurückziehen des Tasters 21 zu ermöglichen, wird der Radialschlitten 7 auch als intelligenter Radialschlitten 7 bezeichnet.

In einer anderen Ausführungsform wird der Radialschlitten 7 nicht automatisch aktiv zurückgezogen, sondern die Kugel 22 gleitet entlang der Zahnflanke bis sie automatisch passiv, zum Beispiel durch die Kraft einer Feder, zurückgezogen wird. Es ist jedoch ein Nachteil dieser Ausführungsform, das die Kugel 22 abgenützt wird.

Dann wird die Kugel 22 durch eine erneute Zustellbewegung in der nächsten Zahnlücke platziert und es wird durch den Linearmotor 12 in der Messposition wieder der vorgegebene Anpressdruck (Messdruck genannt) erzeugt. Dieser Vorgang wird vorzugsweise wiederholt, bis alle Zahnlücken abgetastet wurden.

Mittels eines Wege- oder Positionssensors wird, wie beschrieben, mindestens die Messgrösse *F*ᵣ ermittelt. In dem gezeigten Beispiel kann die Messgrösse *F*ᵣ unter Zuhilfenahme des Glasmassstabs 18 und des Abtastkopfs 19 ermittelt werden. Wie in Fig. 1 zu erkennen ist, weist der Glasmassstab 18 eine Skalierung auf, die durch den Abtastkopf 19 erfasst werden kann.

Vorzugsweise wird die Messgrösse *F*ᵣ, wie beschrieben, für alle Zahnlücken des Zahnrades 3 ermittelt und gespeichert. Bei z Zähnen ergeben sich somit z verschiedene Messgrössen *F*_{r z}. Aus der Verteilung dieser Messgrössen kann eine Aussage über den Rundlauffehler oder die Rundlaufabweichung des Zahnrades 3 gemacht werden. Zum Speichern und Auswerten wird vorzugsweise ein Rechner mit entsprechender Software eingesetzt. Dem Rechner kann eine Schaltung vorgeschaltet sein, die dazu ausgelegt ist gemessenen Signale zu verarbeiten und dem Rechner zu übergeben. Ein Beispiel einer solchen Schaltung ist der Fig. 6 zu entnehmen. Die Software ist vorzugsweise so ausgelegt, dass sie den gesamten Ablauf der Rundlaufmessung (Erfassen der Messgrössen und Steuern der Antriebe 5 und/oder 12) kontrolliert oder auslöst.

In einer weiteren bevorzugten Ausführungsform wird zusätzlich zu den Messwerten *F*ᵣ die Position der jeweiligen Zahnlücke erfasst. Dies kann mit dem Winkelgeber 6 erfolgen. Vorzugsweise wird der Motor 5 so angesteuert, dass das Zahnrad 3 etwas mehr als eine ganze Umdrehung macht, um alle Zahnlücken abtasten zu können. Die Kugel 22 wird in jede Zahnlücke platziert und die Messgrösse *F*ᵣ bei der Bewegungsumkehr der Kugel 22 ermittelt. Wenn man diese Messgrössen mit Winkelpositionsangaben in Bezug setzt, die zum Beispiel vom Winkelgeber 6 stammen, so kann die Rundlaufabweichung für alle Zähne des Zahnrads 3 errechnet werden. Man kann dann zum Beispiel die Messgrössen *F*ᵣ den jeweiligen Zahnlücken zuordnen. Sollte zum Beispiel eine Messgrösse ausserhalb einer vorgegebenen Toleranz (Rundlauftoleranz) liegen, so kann durch die Zuordnung die zugehörige Zahnlücke ermittelt werden. Dies kann bei einer nachgeschalteten Nachbearbeitung oder bei einer nachgeschalteten genaueren Messung hilfreich sein.

In den vorher beschriebenen Beispielen wurden die Messgrössen *F*ᵣ ermittelt, ohne eine Zuordnung zu den Zahnlücken vorzunehmen. In diesem Fall kann dann lediglich eine Aussage darüber gemacht werden, ob ein Rundlauffehler vorliegt und ob der Rundlauffehler zum Beispiel ausserhalb einer vorgegebenen Toleranz liegt. In diesem Fall kann zum Beispiel das "fehlerhafte" Zahnrad ausgesondert werden.

In einer bevorzugten Ausführungsform, wie in den Figuren 1 und 2 gezeigt, ist der Tangentialschlitten 23 mittels einem Kugellager 31 so gelagert, dass er sich linear in Z-Richtung bewegen kann.

In einer anderen Ausführungsform weist der Schlitten 7 einen präzisionsgelagerten Drehpunkt auf, der als Aufhängung dient und den Tangentialschlitten 23 überflüssig macht. Der Taster 21 ist direkt an diesem Drehpunkt aufgehängt und ist vorzugsweise mit einer Feder gekoppelt, die eine Rückstellkraft in ähnlicher Form ausübt wie die Feder 25. Die Feder kann zum Beispiel direkt an dem Taster 21 angreifen. Der Taster 21 samt Kugel 22 führt in diesem Ausführungsbeispiel zusätzlich zur Bewegung parallel zur Y-Achse eine Schwenkbewegung um diesen Drehpunkt aus.

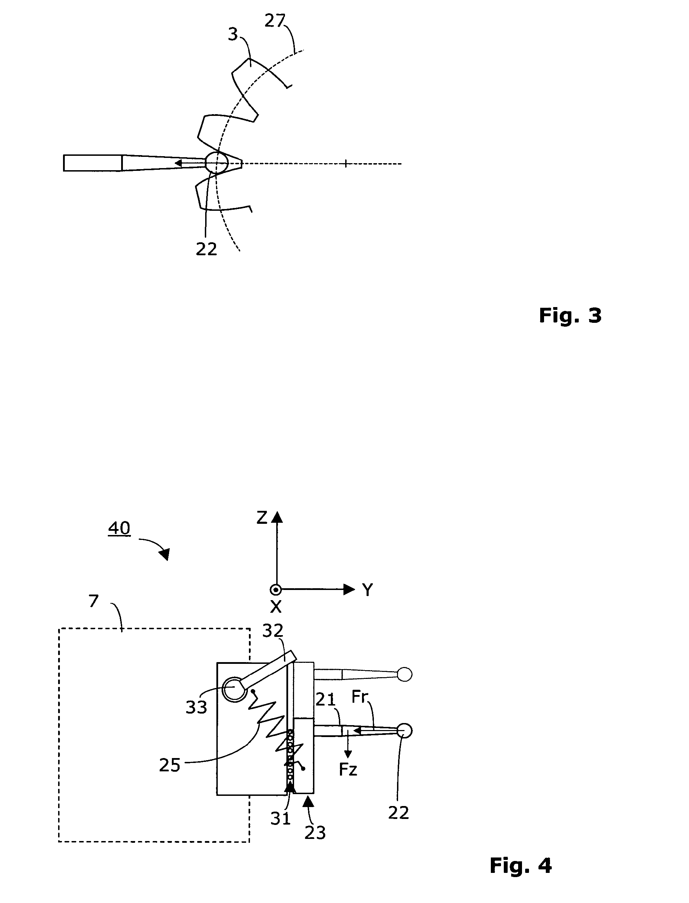

Eine bevorzugte Ausführungsform der Vorrichtung 40 weist am Tangentialschlitten 23 oder am Radialschlitten Mittel auf, um die Vorrichtung 40 an den Modul m des jeweils zu vermessenden Zahnrades 3 anpassen zu können. In der Fig. 4 ist ein beispielhaftes Mittel 32, 33 zur Moduleinstellung gezeigt. Es ist in dem gezeigten Ausführungsbeispiel am Radialschlitten 7 ein Hebelarm 32 vorgesehen, der um eine Achslagerung 33 verstellbar ist. Wenn man den Hebelarm 32 im Uhrzeigersinn verstellt, zum Beispiel nach dem eine Schraube im Bereich der Achslagerung 33 gelöst wurde, wird die Bewegung des Tangentialschlittens 23 eingeschränkt und es kann ein Zahnrad 3 mit einem kleineren Modul m vermessen werden. Um Zahnräder mit grösserem Modul m vermessen zu können, wird der Hebelarm 32 gegen den Uhrzeigersinn verstellt, wobei angemerkt sei, dass in Fig. 4 bereits die grösste Moduleinstellung gezeigt ist.

Um den Taster 21 samt Kugel 22 in einer nachfolgenden Zahnlücke platzieren zu können, kann ein Antrieb auch für eine Bewegung der Tasters 21 in Z-Richtung (d.h. in tangentialer Richtung) vorgesehen sein. Ein solcher zusätzlicher Antrieb, der zum Beispiel einen Linearmotor umfassen kann, ist optional. Bei einfacheren Ausführungsform, die in den Figuren 1 und 2 und in der Fig. 4 gezeigt sind, erfolgt die (Rück-) Überführung des Tangentialschlittens 23 in eine Ausgangsposition mittels Federkraft. Die entsprechende Zugfeder 25 ist in Fig. 2 und in Fig. 4 gezeigt. Die Feder 25 wird beim Verschieben der Aufhängung 23 in negativer Z-Richtung gestreckt. Sobald die Auslenkung der Kugel 22 umkehrt, fährt der Schlitten 23 mit dem Taster 21 zurück in eine Ausgangsposition, die in den Figuren 2 und 4 durch gepunktete Linien angedeutet ist. Dieses Zurückfahren erfolgt parallel zur positiven Z-Achse. Es ist vorteilhafterweise ein Anschlag 26 vorgesehen, wie in Fig. 2 gezeigt, um das Zurückfahren zu stoppen. Alternativ kann ein verstellbarer Hebelarm 32, wie in Fig. 4 gezeigt, als Anschlag dienen. Es liegt auf der Hand, dass es verschiedene Federanordnungen und federnde Element gibt, die eingesetzt werden können, um die Aufhängung 32 in tangentialer Richtung zu bewegen.

Das Grundgestell 1 der erfindungsgemässen Prüfvorrichtung 30 oder 40 trägt vorzugsweise den langgestreckten stationären Teil 16 eines Linearmotors 12 und der dynamische Schwingschlitten 7 den kurzen beweglichen Teil 17 (auch Läufer genannt). Diese Anordnung ist vorteilhaft, da der dynamische Schwingschlitten 7 leicht beweglich ist, da er eine geringe Massenträgheit hat, und keine Energiezuführung über ein Kabel benötigt. Ausserdem kann die in den Spulen des stationären Teils 16 entstehende Wärme von dem Grundgestell 1 leichter abgeführt werden kann.

Ein schematisches Blockschaltbild einer beispielhaften Schaltung 60, gemäss Erfindung, ist in Fig. 6 gezeigt. Die Schaltung erfüllt im gezeigten Beispiel im Wesentlichen zwei Funktionen. Einerseits umfasst sie eine Ansteuerung 72 zum Ansteuern eines Linearmotors 12 und andererseits Elemente zum Verarbeiten der Messgrössen eines Wege- oder Positionsgebers 18, 19. Der Radialschlitten 7 umfasst im gezeigten Ausführungsbeispiel einen langgestreckten Stator 16 und einen kurzen Läufer 17 (ähnlich wie in Fig. 1 und 2). Eine Radialverschiebung des Schlittens 7 wird mit einem Glassmassstab 18 und einem Sensor 19 abgegriffen und einer Verarbeitungsschaltung zugeführt. Im gezeigten Beispiel handelt es sich bei dem Wege- oder Positionsgeber aus den Elementen 18 und 19 um einen Inkrementalgeber, der Sinus und Cosinus-Signale liefert. Diese Signale werden einer Signalweiche 69 zugeführt, die einerseits die Signale einem ersten Interpolator/Zähler 70 und andererseits einem zweiten Interpolator/Zähler 68 zur Verfügung stellt. Der erste Interpolator/Zähler 70 hat typischerweise eine grössere Samplingrate (z.B. 1024), um einen Umsetzung der analogen Signale in digitale Signale zu bewerkstelligen. Diese digitalen Signale werden von dem ersten Interpolator/Zähler 70 über einen Rechner Bus 71 einem Rechner übergeben. Der zweite Interpolator/Zähler 68 hat typischerweise eine kleinere Samplingrate (z.B. 50), um einen Umsetzung der analogen Signale in digitale Steuersignale zu bewerkstelligen.

Diese digitalen Steuersignale werden durch eine Ansteuerung 72 verarbeitet, um den Radialschlitten 7 zurückziehen zu können, wie bereits beschrieben. In dem gezeigten Ausführungsbeispiel weist die Ansteuerung 72 zum Beispiel einen Positionsdekoder 67 auf, der die Ist-Position des Schlittens 7 ermittelt. Der nicht gezeigte Rechner kann über den Bus 71 und über eine Kommunikationsschnittstelle und ein Bewegungsprofil-Controller 64 mit entsprechender Soft- und Hardware ein gewünschtes Bewegungsprofil für den Schlitten 7 vorgeben. Ein Summierglied 66 überlagert die als gewünschtes Bewegungsprofil vorgegebene Schlittenposition mit der Ist-Position. Es folgt im gezeigten Beispiel ein Filter 63 und ein Digital-Analog Wandler 62. Am Ausgang des Digital-Analog Wandler 62 liegt ein analoges Signal, dass entweder direkt oder nach Weiterverarbeitung durch einen entsprechenden Momenten-Regler 61 zum Ansteuern der Linearmotors 12 verwendet wird. Der Rechner mit entsprechender Software zusammen mit den Elementen 62 - 66 kann als ein Teil einer CNC Steuerung angesehen werden.

Die (CNC-)Steuerung für den Linearmotor 12 ist vorzugsweise so ausgelegt, dass vom Linearmotor 12 der vorgegebene Anpressdruck (Messdruck) aufgebracht wird.

Der Linearmotor 17 wird zum Positionieren des Radialschlittens 7 und des Tasters 21 genutzt. Mit Hilfe der CNC-Steuerung ist es möglich, den Messdruck optimal für die zu prüfenden Zahnräder 3 einzustellen. Ausserdem kann, je nach Ausführungsform der Erfindung, ein am Linearmotor 12 vorhandenes lineares Messsystem zusätzlich dazu verwendet werden, die Rundlaufabweichung zu messen und die Messgrössen von der CNC-Steuerung oder einem anderen Rechner speichern und auswerten zu lassen. Es ist aber, wie bereits erwähnt, auch möglich, andere Positions- oder Weggeber einzusetzen, die von dem Linearmotor 12 unabhängig sind.

In einer bevorzugten Ausführungsform ist der Durchmesser D der Kugel 22 so gewählt, dass die Kugel 22 genau mit dem Kugelmittelpunkt M auf dem V-Kreis 27 des Zahnrads 3 zu liegen kommt, wie in Fig. 3 angedeutet. Details hierzu sind der eingangs genannten Norm DIN 3960 zu entnehmen.

Bei einer anderen Ausführungsform wird das Zahnrad 3 durch den Motor 6 schrittweise um die Achse 4 gedreht. Die Drehung wird so kontrolliert, dass beim Eintauchen und beim Zurückfahren des Tasters 21 mit der Kugel 22 das Zahnrad 3 jeweils kurz angehalten wird. Während der Messung selbst wird das Zahnrad 3 kontinuierlich gedreht, wie durch den Pfeil 24 angedeutet. Bevorzugt ist aber diejenige Ausführungsform, bei der während der gesamten Rundlaufmessung das Zahnrad 3 kontinuierlich gedreht wird.

Der Tastkopf 22 kann statt einer Kugel 21 einen Kegel oder einen Keil tragen, wie in der DIN Norm 3960 vorgeschlagen.

Gemäss Erfindung kann die Rundlaufabweichung sehr genau vermessen werden.

In einer bevorzugten Ausführungsform wird die beschriebene Vorrichtung 30 mit einer Messvorrichtung zur Teilungsmessung kombiniert. In diesem Fall können zusätzlich zu dem Taster 21 mit Kugel 22 zwei weitere Taster vorgesehen sein, die zum Ermitteln der Teilung p (Abstand von einer rechten Flanke zur nächsten rechten Flanke) eingesetzt werden. Durch diese beiden Taster kann die Variation des Abstands zwischen diesen Flanken ermittelt werden. Aus den Messwerten, die von den beiden Tastern ermittelt werden, kann ein sogenanntes Teilungsdiagramm ermittelt werden. Eine Berechnung der Rundlaufabweichung aus dem Teilungsfehler ist kaum möglich, da bereits sehr kleine Teilungsfehler zu grossen Rundlaufabweichung führen. Daher wird bevorzugt, wenn man den Teilungsfehler unabhängig von der Rundlaufabweichung ermitteln kann.

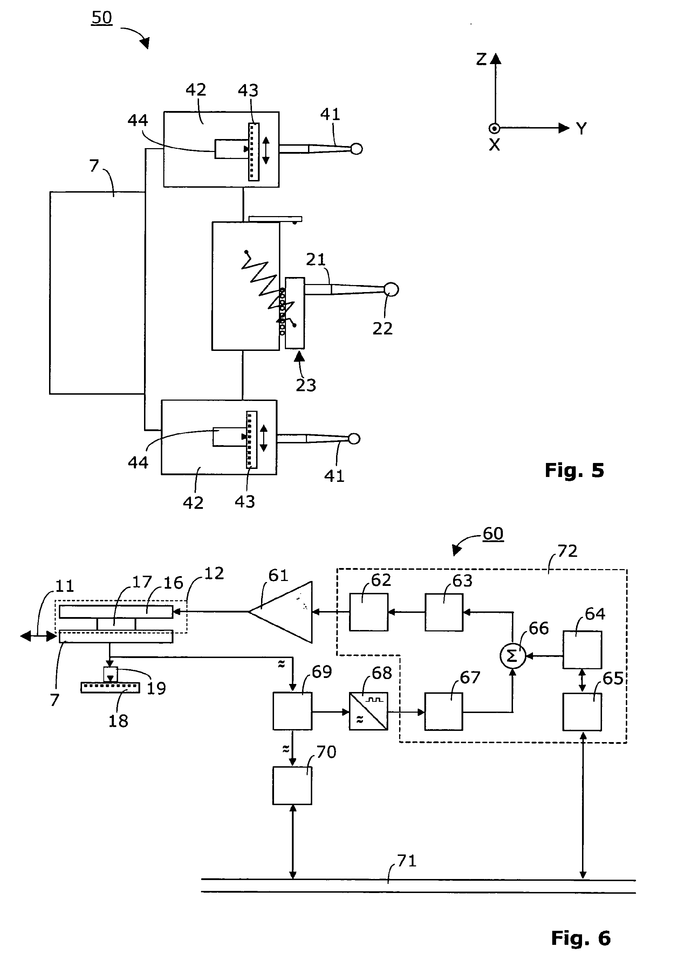

Eine Vorrichtung 50 mit einer Messvorrichtung zur Teilungsmessung ist in Fig. 5 gezeigt. Die Messvorrichtung zur Teilungsmessung ist mindestens zum Teil auf dem ersten Schlitten 7 angeordnet ist, wobei diese Messvorrichtung zur Teilungsmessung vorzugsweise zwei Taster 41 umfasst. Der Taster 21 mit der Kugel 22 wird vorzugsweise auf die Seite bewegt, weggeklappt oder abgenommen, wenn die beiden Taster 41 zum Einsatz kommen. Die beiden Taster 41 werden bei der Teilungsmessung gleichzeitig mit zwei rechten oder zwei linken Flanken des zu vermessenden Zahnrades 3 (nicht in Fig. 5 gezeigt) in Berührung gebracht. Jeder Taster weist einen eigenen Weggeber 42 auf, der im gezeigten Beispiel einen Glassmassstab 43 und einen Sensor 44 umfasst. Mittels der Weggeber 42 kann die relative Verschiebung der beiden Taster erfasst und einer Auswertung zugeführt werden. Es kann zum Verarbeiten der Signale der beiden Weggeber 42 eine Schaltung eingesetzt werden, die analog der in Fig. 6 gezeigten Schaltung ausgelegt ist.

Es können gemäss Erfindung induktive, kapazitive, optische oder sonstige Weg- oder Winkelmesssysteme zum Aufnehmen der Bewegungen eingesetzt werden, die beim erfindungsgemässen Prüfvorgang auftreten können.

Es werden vorzugsweise elektrisch angesteuerte Linearmotoren verwendet, um den Schlitten 7 zu bewegen. In einer anderen Ausführungsform wird eine Kombination aus elektrisch angesteuerten Linearmotoren und elektromagnetischen Direktantrieben verwendet, wie zum Beispiel in DE 196 41 720 A1 beschrieben. Da die elektromagnetischen Direktantriebe nur sehr kleine Verschiebungen erzeugen können, wird eine Grobzustellung mittels der elektrisch angesteuerten Linearmotoren ausgeführt. Die elektromagnetischen Direktantriebe dienen dann der Feinzustellung.

Vorzugsweise werden als Wege- oder Positionssensoren inkremental arbeitende System eingesetzt, die 2 Spuren abtasten und neben einem Sinussignal auch ein Cosinus-Signal liefern. Dadurch kann die Genauigkeit erhöht werden.

Eine Vorrichtung gemäss Erfindung eignet sich besonders zu quasimanuellen Vermessen von Zahnrädern.

## Patentansprüche

1. Vorrichtung (30; 40; 50) mit einer Lagerung (2) zum drehbaren Lagern eines zu vermessenden Zahnrades (3), einem ersten Antrieb (5) zum Drehen des zu vermessenden Zahnrades (3), und mit einem ersten Schlitten (7), der durch einen zweiten Antrieb (12) radial in Bezug zu einem auf der Lagerung (2) gelagerten Zahnrad (3) verschiebbar ist, **dadurch gekennzeichnet, dass**
- der erste Schlitten (7) eine Aufhängung (23) aufweist, die einen Taster (21) mit Tastkopf (22) mit dem ersten Schlitten (7) verbindet, wobei die Aufhängung (23) so ausgeführt ist, dass sie eine Bewegung des Tasters (21) mit Tastkopf (22) in einer Richtung erlaubt, die mindestens teilweise tangential in Bezug zu dem auf der Lagerung (2) gelagerten Zahnrad (3) verläuft,
- eine Ansteuerung (60) vorgesehen ist, um den ersten Schlitten (7) samt der Aufhängung (23) und dem Taster (21) mit Tastkopf (22) radial in eine Zahnlücke des zu vermessenden Zahnrades (3) zuzustellen, um den Tastkopf (22) mit zwei Flanken der Zahnlücke in Verbindung zu bringen,
- eine Messvorrichtung (18, 19; 60) vorgesehen ist, um mindestens eine Messgrösse (*F*ᵣ) zu erfassen, welche die Verschiebung des Tastkopfes (22) in der Zahnlücke beschreibt während das zu vermessende Zahnrad (3) durch den ersten Antrieb (5) gedreht wird und welche von dem zu vermessenden Zahnrad (3) aus betrachtet radial nach aussen gerichtet ist.

2. Vorrichtung (30; 40; 50) nach Anspruch 1, **dadurch gekennzeichnet, dass** die Ansteuerung (60) so ausgelegt ist, dass der Tastkopf (22) nacheinander in jede Zahnlücke des Zahnrades (3) eintaucht und herausbewegt wird, wobei für jede der Zahnlücken eine zugehörige Messgrösse (*F*ᵣ) erfasst wird.

3. Vorrichtung (30; 40; 50) nach Anspruch 1 oder 2, **dadurch gekennzeichnet, dass** die Aufhängung (23) als zweiter Schlitten ausgeführt ist, der mittels einer Linearführung an dem ersten Schlitten (7) gelagert ist.

4. Vorrichtung (30; 40; 50) nach Anspruch 1 oder 2, **dadurch gekennzeichnet, dass** der Taster (21) mit Tastkopf (22) eine längliche Form hat, deren Längsachse so verläuft, dass der Tastkopf (22) durch eine Linearverschiebung des ersten Schlittens (7) radial in die Zahnlücke einführbar ist.

5. Vorrichtung (30; 40; 50) nach Anspruch 4, **dadurch gekennzeichnet, dass** der Tastkopf (22) eine Kugel, ein Kegel, oder ein Keil ist.

6. Vorrichtung (30; 40; 50) nach Anspruch 1 oder 2, **dadurch gekennzeichnet, dass** die Ansteuerung (60) so ausgelegt ist, dass sie automatisch den ersten Schlitten (7) mit dem Taster (21) und dem Tastkopf (22) aus der Zahnlücke zurückzieht, sobald eine Richtungsumkehr der Bewegung des Tastkopfes (22) in der Zahnlücke auftritt.

7. Vorrichtung (30; 40; 50) nach Anspruch 1 oder 2, **dadurch gekennzeichnet, dass** die Messvorrichtung (18, 19, 60) einen im Bereich des ersten Schlittens (7) angeordneten Wege- oder Positionssensor umfasst, der eine Weginformation als Messgrösse ausgibt, welche die Verschiebung des Tastkopfes (22) in der Zahnlücke beschreibt.

8. Vorrichtung (30; 40; 50) nach Anspruch 1 oder 2, **dadurch gekennzeichnet, dass** ein Anschlag (26; 32, 33) für die Aufhängung (23) und/oder den Taster (21) vorgesehen ist, der vorzugsweise verstellbar ist, wobei der Anschlag (26; 32, 33) die Bewegung der Aufhängung (23) und/oder des Tasters (21) in tangentialer Richtung begrenzt.

9. Vorrichtung (50) nach einem der vorhergehenden Ansprüche, **dadurch gekennzeichnet, dass** eine Messvorrichtung zur Teilungsmessung vorgesehen ist, die zum Teil auf dem ersten Schlitten (7) angeordnet ist, wobei diese Messvorrichtung zur Teilungsmessung vorzugsweise zwei Taster (41) umfasst, die gleichzeitig mit zwei rechten oder linken Flanken des zu vermessenden Zahnrades (3) ein Berührung gebracht werden können.

10. Vorrichtung (50) nach Anspruch 9, **dadurch gekennzeichnet, dass** die Messvorrichtung zur Teilungsmessung zwei Geber (42) umfasst, um Auslenkungen der zwei Taster (41) erfassen zu können.
